(19) Europäisches Patentamt

European Patent Office

Office européen des brevets

(11) EP 0 864 547 B1

(12) **EUROPEAN PATENT SPECIFICATION**

(45) Date of publication and mention
of the grant of the patent:
**10.07.2002 Bulletin 2002/28**

(51) Int Cl.[7]: **C04B 28/02**, B09B 3/00

(21) Application number: **98104148.6**

(22) Date of filing: **09.03.1998**

(54) **Cementitious compositions for immobilization or inertization of waste, their preparation and use**

Zementzusammensetzungen zum Immobilisieren und Inertisieren von Abfällen, ihre Herstellung und Verwendung

Compositions cimentaires pour l'immobilisation et l'inertisation des déchets, leur préparation et utilisation

(84) Designated Contracting States:
**BE ES FR GR IT**

(30) Priority: **10.03.1997 IT MI970519**

(43) Date of publication of application:
**16.09.1998 Bulletin 1998/38**

(73) Proprietor: **Italcementi S.p.A.**
**24121 Bergamo (IT)**

(72) Inventors:
- **Costa, Umberto**
  **24124 Bergamo (IT)**
- **Facoetti, Mario**
  **24052 Azzano S. Paolo, Bergamo (IT)**
- **Guerra, Giuseppe**
  **24127 Bergamo (IT)**

(74) Representative: **Gervasi, Gemma, Dr.**
**Notarbartolo & Gervasi S.p.A.,**
**Corso di Porta Vittoria, 9**
**20122 Milano (IT)**

(56) References cited:
**US-A- 4 999 056     US-A- 5 551 976**
**US-A- 5 584 926**

- **PATENT ABSTRACTS OF JAPAN vol. 097, no. 010, 31 October 1997 & JP 09 165242 A (CHICHIBU ONODA CEMENT CORP), 24 June 1997, & DATABASE WPI Section Ch, Week 9735 Derwent Publications Ltd., London, GB; Class K07, AN 97-381201**

## Description

## Scope of the invention

The present invention regards the inertization or immobilization of waste , using a mixture with a cement binder in a quantity of up 20 % by weight, and even higher, with respect to the mixture of the components of the cementitious composition in the dry state.

In this text, the term "inertization" means the elimination of the toxic and harmful character of the waste, in particular according to the Decree of the President of the Italian Republic (DPR) No. 915/1982, which thereby makes possible recycling of the waste, and by the term "immobilization" is meant the reduction thereof within the limits of release specified by Italian laws (such as the "Merli" Act) for depositing in dumps.

These aims are achieved for the purposes of the present invention by means of the solidification-stabilization of the waste, using a mixture with a cement binder having a maximum soluble alkali content of 0.45 % by weight with respect to the cement binder in the dry state.

In the present text, by the term "soluble alkali" is meant soluble equivalent $Na_2O$.

The present invention is aimed, in particular, at the inertization of prevalently inorganic waste, i.e., waste having a maximum content of organic substance of 30 % by weight with respect to the waste in the dry state, where by the term "dry state" is normally meant a maximum water content of 10 % by weight with respect to the weight of the material considered.

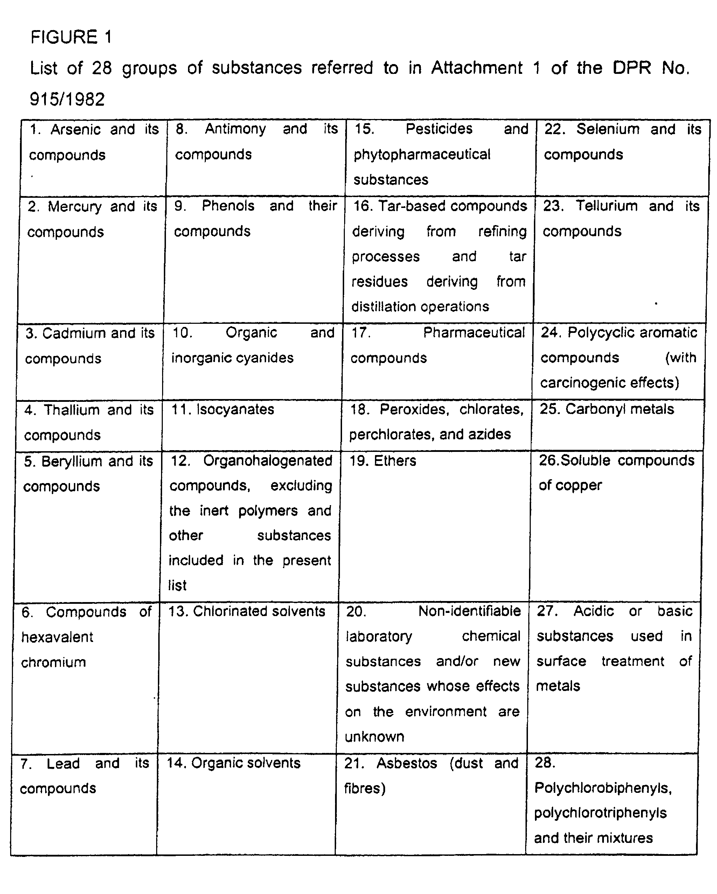

The present invention applies in particular to toxic and harmful waste as classified by the DPR No. 915/1982 and subsequent modifications, according to which the waste containing one or more of the substances, indicated in Attachment 1 of the aforementioned decree (see Figure 1) and/or one or more of the by-products coming from production activities or service activities appearing in the List 1.3 of the Italian Ministerial Provision No. 253 of September 13, 1984, is considered as toxic and harmful.

The waste to which the present invention typically applies contains, for example, one or more heavy metals or other toxic and harmful elements, such as arsenic, cadmium, chromium (in particular hexavalent chromium), mercury, lead, copper, selenium, tellurium and their compounds (salts or complexes, either organic or inorganic), and more in particular hexavalent chromium and/or lead and their compounds.

Listed below are the limit concentrations (LCs) of some of these metals that are by law allowed to be present in waste, expressed in mg of metal per kg of waste:

- Arsenic and its compounds            LC        100 mg/kg
- Cadmium and its compounds          LC        500 mg/kg
- Hexavalent chromium and its compounds        LC        100 mg/kg
- Mercury and its compounds          LC        100 mg/kg
- Lead and its inorganic compounds        LC        5000 mg/kg
- Copper and its soluble compounds        LC        5000 mg/kg
- Selenium and its soluble compounds        LC        100 mg/kg
- Tellurium and its compounds        LC        100 mg/kg

Examples of industrial waste to which the present invention applies are blast-furnace and foundry slag, ashes deriving from the combustion of coal or mineral oils, sludge from purification of fumes, sludge from treatment of metals and rocks, sludge from electro-galvanizing processes, residues of ceramic processes, sludge from tanning processes, paint residues, ashes from incineration plants, and sludge and slag deriving from chemical and electro-chemical processes.

The present invention applies more in particular to the so-called "ultimate waste", i.e., materials to which it is not possible to apply any valorization process, such as:

- residues of incineration of solid and urban waste;
- non-ferrous blast-furnace slag;
- mineral residues of the chemical industry, for example of the catalysts industry;
- asbestos residue.

In the present text, by "cement binder" is meant a cementitious material in the dry, solid state, which, when it is mixed with a mixing fluid, in particular water, yields plastic mixtures that are able to harden and set. The cement binder is in particular the so-called "cement" belonging to the hydraulic binders according to the ENV 197-1 Standard.

In this text, by "cementitious composition" or "cement mixture" is meant any composition in which a cement binder is mixed with a mixing fluid, typically water, optionally with one or more aggregates of various grain size, and optionally also with one or more cementitious additives.

Consequently, cementitious compositions include both cement pastes, i.e., mixtures comprising cement binders, water and, optionally, additives, devoid of aggregates, and conglomerates, i.e., mixtures comprising water, cement and aggregates, and, optionally, additives.

"Aggregates" or "inert materials" may be coarse stone materials, such as crushed stones or gravel, or fine aggregates, such as sand, and are classified in particular in the UNI 8520 Standards.

Additives are products used for modifying the rheological characteristics of setting and hardening of pastes and mortars. These additives are classified in particular in the UNI 7101 Standard. The quantity of additives range, for example, from 0 % by weight to 10 % by weight with respect to the weight of the cement binder in the dry state.

Examples of conglomerates are mortars (mixtures comprising binder, water and fine aggregate) and concretes (mixtures comprising water, cement, fine aggregate and coarse aggregate).

The quantity of water used in the cementitious compositions is that sufficient for completing the cement hydration reaction and for providing optimal workability in the plastic state of the mix. The proportions between water, binder and, optionally, aggregates of the present cementitious compositions may vary within wide limits and depends upon the properties and final uses of the desired mortars and concretes. In general terms, the amount of water ranges approximately from 20 % by weight to 80 % by weight with respect to the weight of the binder.

**Technical problem**

The accumulation of waste deriving from normal industrial activities poses serious problems of an ecological and economic nature to modern society.

In Italy, for example, the majority of urban refuse and waste of a similar type is disposed of in dumps, without practically undergoing any treatment. A small portion of urban waste, which in 1992 was estimated at approximately 1,900,000 tonnes per year, is treated in incinerators. The incineration process produces approximately 30 % by weight of ashes with respect to the starting material (i.e., approximately 500,000 to 600,000 tonnes of ashes per year).

The ashes from incinerators present a high concentration of harmful and toxic substances, for the most part represented by heavy metals, such as lead, cadmium, nickel. chromium, copper, and zinc, which pose a series of problems regarding the final disposal of this waste, which must be disposed of in special dumps.

In addition to ashes from incinerators, incineration plants produce slag which gathers prevalently at the level of the boiler combustion chamber, and which has a chemical composition similar to that of the ashes but differing from the latter mainly as regards grain size, which is larger than that of the ashes. This type of slag is known in France as "mâchefer" and in Italy as "scorie da focolare" (boiler slags). All these types of slag and ashes are to be considered as useful for the purposes of the present invention.

The Resolution of the Italian Interministerial Committee, referred to in Art. 5 of the DPR No. 915 of September 10, 1985, sanctions the obligation to dispose of toxic and harmful waste in special dumps, of type B or type C.

Type-B dumps are areas for final storage in which it is possible to dispose of both special waste and toxic and harmful waste, either as such or treated, provided that it does not contain substances belonging to the groups 9-20 and 24, 25, 27, and 28 referred to in Attachment 1 of the DPR No. 915/1982 in concentrations higher than 1/100 of their respective limit concentrations, and provided that it has the characteristics of release of heavy metals, as specified hereinafter.

A subsequent Resolution of the Italian Interministerial Committee dated July 14, 1986 established that the behaviour of waste under the action of leaching of meteoric water and liquids percolated from mixed dumps, i.e., dumps containing waste of both an organic and inorganic matrix, should be assessed by means of a release assay under the action of acetic acid, and that, in addition, a release assay should be carried out with $CO_2$-saturated water, for the purpose of identifying the waste to be disposed of in dumps designed to receive exclusively waste having an inorganic matrix.

On the basis of this release assay, the class of the dump in which a given type of waste may be deposited is identified.

The dumps of type B are distinguished into two classes, B1 and B2. In B1-type dumps it is possible to dispose of refuse that releases heavy metals up to the limits contemplated in Table A of the Italian Act No. 319/1976 (referred to as the "Merli" Act) and its subsequent modifications.

B2-type dumps may receive waste which exceeds by up to 10 times the parameters of release set forth by the aforementioned "Merli" Act, but must possess much higher characteristics of impermeability than those typical of B1-type dumps.

The dumps of type C are storage areas for final depositing, in which it is possible to dispose of various types of waste, among which the substances belonging to groups 9-20 and 24, 25, 27, and 28 referred to in the above-mentioned Attachment 1 of the DPR No. 915/1982, provided that their concentrations do not exceed by 10 times the corresponding LCs, as defined above. A limited number of such dumps is currently present in Italy.

For B1-type dumps less stringent requirements are thus contemplated than those for dumps of types B2 and C, above all as far as impermeability and systems of storage and treatment of percolation water are concerned.

There thus emerges clearly the interest to store waste containing toxic and harmful elements, such as ashes from incinerators, in 81-type dumps, rather than in dumps of types B2 or C.

Among the sorts of treatment proposed for ashes, inertization by encapsulation in cement mixtures has been used with good results.

It is known, however, that when the attempt is made to inertize ashes by mixing them with a cement binder, in many cases mixtures are obtained that harden very slowly or do not harden at all, even after 28 days. In these cases, the release of heavy metals is higher than the limits established by the aforementioned "Merli" Act, i.e., unsatisfactory for disposal in 81-type dumps.

Another drawback is represented by the tendency of the mixtures to expand.

The drawbacks referred to above are particularly marked when quantities of ashes of over 5 % by weight with respect to the total components of cementitious composition in the dry state are incorporated.

There thus emerges the evident advantage of finding a method for improving the inertization or immobilization of waste, which enables incorporation of quantities of waste higher than 5 % by weight in cementitious compositions, obtaining good characteristics of release and/or mechanical strength, and a good volumetric stability (absence of expansion) of the mixtures, which are consequently not subject to cracking.

**Summary of the invention**

Now the applicant has unexpectedly found that it is possible to inertize or immobilize satisfactorily, by incorporating them in a cementitious composition, large quantities of ashes or other types of waste by mixing them with a cement binder having "soluble equivalent $Na_2O$" value of less than, or equal to, 0.45 % by weight.

The present invention thus regards the use of cement binders having a maximum soluble alkali value of 0.45 % by weight in the inertization or immobilization of waste, in particular toxic and harmful waste. In particular, the subject of the present invention is a method for the inertization or immobilization of waste, in which at least one cement binder is mixed with at least one type of waste, characterized in that the said cement binder has a maximum soluble equivalent $Na_2O$ content of 0.45 % by weight with respect to the weight of the cement binder in the dry state.

In particular, at least one type of waste is mixed by means of a mixing fluid, typically water, with at least one cement binder having the aforesaid soluble alkali value, optionally together with one or more inert aggregates, and optionally with one or more cementitious additives.

A further object of the present invention are the resulting cementitious compositions, comprising at least one type of waste, at least one cement binder, optionally one or more inert aggregates, and optionally one or more cementitious additives, characterized in that the cement binder has a maximum soluble equivalent $Na_2O$ content of 0.45 % by weight with respect to the weight of the dry binder.

In addition to the cementitious compositions already mixed with water (pastes, mortars, concretes), premixes in the dry state comprising at least one cement binder, optionally one or more aggregates, and optionally one or more additives for cementitious materials, and their use in the preparation of the present cementitious compositions are useful in the context of the present invention.

Heavy metals and other toxic and harmful elements are not released by the cementitious compositions according to the present invention in quantities higher than those allowed by the aforesaid "Merli" Act and its subsequent modifications, even after only a few days of curing, thus enabling their storage in dumps that present fewer constraints.

In the case of boiler slags, it is possible to recycle these by using the resultant cementitious products, for example as road subgrades, these cementitious products constituting further subjects of the present invention.

The present invention makes it possible to inertize or immobilize high quantities of waste, even higher than 5 % by weight with respect to the total weight of the components of the cementitious composition in the dry state, for example, up to 20 % by weight and even higher, to yield cementitious mixtures having requisites that are unexpectedly better from the standpoint of rate of hardening, mechanical strength, hydrometric stability, durability, porosity, and/or release of toxic and harmful elements, as compared to the mixtures obtained from binders with soluble alkali values higher than 0.45 % by weight.

The advantages of the present invention are thus represented by:

- high capacity for retention of heavy metals and other toxic and harmful waste;
- compatibility with a vast range of materials, in particular moist ones;
- control of mechanical strength and durability;
- volumetric and structural stability of the castings;
- use of an already available technology and one that is simple to implement;
- economy of the inertization process.

## Detailed description of the invention

In the present text, the percentage of "soluble equivalent $Na_2O$" is defined as follows:

% $Na_2O$ sol. equivalent = % $Na_2O$ sol. + % $K_2O$ sol. x 0.658 where "sol." stands for "soluble".

The value of the percentage of soluble equivalent $Na_2O$ is determined by analysing, by means of conventional methods, the content of $Na_2O$ and $K_2O$ alkalis present in the aqueous solution obtained by dispersing the cement in distilled water (one gram of cement in 100 ml of distilled $H_2O$) and keeping the dispersion stirred for 15 minutes (typically at room temperature, e.g. + 20°/+ 25°C).

It is preferable to use a cement binder having a soluble equivalent $Na_2O$ content of between 0.10 % by weight and 0.30 % by weight with respect to the weight of the dry binder.

Typically, the cement binders suitable for the purpose of the present invention have a "soluble $Na_2O$" value lower than or equal to 0.15 % by weight, preferably lower than or equal to 0.10 % by weight, and soluble $K_2O$ value lower than or equal to 0.35 % by weight, more preferably lower than or equal to 0.31 % by weight with respect to the dry binder.

The value of release of soluble alkalis is an intrinsic characteristic of the cement binder which is independent of other characteristics, such as whether the cement binder in question belongs to a given type according to the UNI/ENV 197.1 Standards (types I, II, III, IV or V), or the class of compressive strength, it being possible, for example, for similar values of soluble alkalis to be found in cements of class 42.5 or class 32.5, as well as different values in two cements belonging to the same class of strength.

Taking into account what has been pointed out above, cement binders suitable for the purpose of the present invention may, for instance, belong to the categories of cements of type I (portland cement), type II (composite portland cement), type III (slag cement), type IV (portland-pozzolana cement), or type V (composite cement), as defined by the European Pre-standard UNI/ENV 197.1, and, as far as mechanical strength is concerned, they may, for example, belong to classes 32.5, 42.5 or 52.5.

For example, particularly preferred is the cement of type IV/A, class of strength 32.5 having the soluble equivalent $Na_2O$ value appearing in Table 1 and the composition appearing in Table 2.

According to a typical embodiment of the present invention, the waste consists of incinerator ashes where, in particular, the toxic and harmful substances are for the most part represented by heavy metals, such as lead, cadmium, nickel, chromium, copper and zinc.

More in particular, incinerator ash may contain, for example, cadmium in quantities of over 100 ppm and lead in quantities of over 5000 ppm, i.e., quantities higher than those allowed by current Italian law.

This ash may have, for example, a glass content of less than 5 % by weight with respect to the total weight of the ash in the dry state. A typical type of ash is, for instance, the one having the composition shown later in Table 3.

According to another embodiment of the present invention, the waste comprises boiler slags as defined above.

The preparation of the cementitious compositions according to the present invention is carried out according to conventional techniques. Typically, the waste to be treated, either as such or after it has undergone simple physical pretreatments (such as drying, crushing and sieving) is mixed using water or another mixing fluid with the cement binder, optionally with one or more aggregates, and optionally also with one or more cement additives (such as fluidifiers, accelerators, etc.) at temperatures of typically between approximately +5°C and approximately +30°C, for example at room temperature (i.e., at approximately between +20°C and +25°C).

In the course of setting of the cement binder used, the dangerous chemical species present in the waste to be treated (in particular, heavy metals) are hypotized to precipitate in insoluble form in the cement paste matrix, the said species having in this way been inertized or immobilized.

According to a typical embodiment of the present invention, the amount of waste used, and which may be encountered in the final composition, reaches approximately 20 % by weight, and is typically comprised between approximately 5 % by weight and approximately 20 % by weight, with respect to the total amount of components of the cementitious composition in the dry state.

The waste/cement binder weight ratios used, and which may be encountered in the final cementitious composition, are preferably comprised between 1:2 and 3:1, typically 2:1.

The quantity of water used for mixing is that required to obtain a cement mixture of the desired consistency, the water/cement binder (W/CB) weight ratios used, and which may be encountered in the present cementitious compositions, being preferably between 0.6 and 0.4, typically 0.5 with respect to the cement binder in the dry state.

It should be noted that the use of cement binders having "soluble equivalent $Na_2O$" values higher than those established according to the present invention means that, given the same amount of waste, mixtures having unsatisfactory characteristics of mechanical strength and poor volumetric stability are obtained.

According to a typical embodiment of the present invention, the cementitious composition is a conglomerate, for instance a mortar, containing at least one type of waste, at least one cement binder, as defined above, and at least one aggregate, in cement binder:aggregate:waste weight ratios of preferably between 3:1:1 and 1:1:2, for example 2:1:1.

The compressive strength of the present cementitious compositions after 3 days of curing is preferably of at least 0.3 N/mm$^2$, and more preferably ranges from approximately 3 N/mm$^2$ to approximately 15 N/mm$^2$, measured according to the UNI-ENV 196 Standards, Part 1. Moreover, after 7 days of curing, the compressive strength is preferably higher than 10 N/mm$^2$, for example, approximately 14-20 N/mm$^2$, according to the standards referred to above.

According to certain international standards (for example, the French experimental standards X31-212) the minimum value of compressive strength for products solidified to achieve immobilization of waste is approximately 2 N/mm$^2$ after 7 days of curing.

All the tested cements referred to herein reach the above value.

After 28 days of curing, the compressive strength of the present compositions is preferably of at least approximately 36 N/mm$^2$, measured according to the UNI-ENV 196 Standards, Part 1, for example, 36-40 N/mm$^2$.

Preferably, the present method makes it possible to obtain cementitious compositions which, when subjected to the release assay with acetic acid in accordance with the Resolution of the Italian Interministerial Committee of July 14, 1986, after 3 days of curing, release hexavalent chromium in quantities lower than the limits contemplated by the Resolution of the Italian Interministerial Committee referred to in Art. 5 of the Italian DPR No. 915 of September 10, 1985 (hereinafter referred to as DCI No. 915 of Sept. 10, 1985) for 82-type dumps, and have pH values in conformance with the ones established by the above Resolution; after 28 days of curing, they release hexavalent chromium in quantities equal to or lower than the limits set forth by the same Resolution for B1-type and 82-type dumps, and have pH values in conformance with what is set down in the same Resolution.

In addition, already after 3 days of curing, the above cementitious compositions release toxic and harmful elements other than hexavalent chromium in concentrations lower than the limits set for B2-type and B1-type dumps as defined in DCI No. 915 of Sept. 10, 1985.

In addition, after the wash assay according to the Italian UNI 10397 Standard, the compositions obtained according to the method of the present invention release toxic and harmful elements in concentrations lower than the limits set by Table A of the aforementioned "Merli" Act and its subsequent modifications: according to a particular embodiment of the present invention, after 102 days of washing, the said compositions release quantities of hexavalent chromium lower than or equal to 0.100 mg/kg, more preferably lower than or equal to 0.04 mg/kg (mg per kg of cementitious composition, water included), and as far as lead is concerned, after 102 days of washing they release quantities of lead lower than or equal to 0.500 mg/kg, more preferably lower than or equal to 0.350 mg/kg (mg per kg of cementitious composition, water included).

The values of expansion of the cementitious compositions obtained using the present method typically range from 0.1% to 6%, preferably from 0.1% to 3%, more preferably from 0.1% to 0.4%, expressed as percentage variation in thickness of prisms of cementitious compositions (3 formed in 4x4x16 cm moulds and 3 formed in 4x2x16 cm moulds). The said variation in thickness is measured upon ejection, which takes place 24 hours after formation in mould, after the specimen has been kept for this period of time at room temperature and exposed to air, and is calculated according to the following formula:

$$\frac{X - 40}{40} 100$$

where X is the mean value of thickness of the prisms at the moment of ejection. Described below are a number of particular embodiments of the present invention, given to provide an illustration, without thereby limiting the scope of the invention.

EXAMPLE 1

Various specimens of cementitious compositions were prepared by mixing incinerator ash, a cement binder and sand with water.

Table 1 shows the values of soluble alkalis, and Table 2 gives the chemical compositions of the cement binders.

Table 3 presents the composition of the incinerator ash.

Table 4 presents the weight ratios between the components of the cementitious compositions obtained.

The specimens of cementitious compositions of the invention, i.e., prepared using cement binders having soluble equivalent Na$_2$O values of up to 0.45 % by weight, are numbered from 1 to 5; the comparison specimens, prepared using cement binders having soluble equivalent Na$_2$O values higher than 0.45 % by weight, are indicated as specimens A-D.

TABLE 1

| Specimen Number | Cement Type | Class | % $Na_2O$ | % $K_2O$ | %$Na_2O$ eq. |
|---|---|---|---|---|---|
| 1 | II/B-S | 42.5 | 0.05 | 0.28 | 0.23 |
| 2 | II/B-S | 42.5 | 0.15 | 0.39 | 0.41 |
| 3 | II/A-D | 32.5 | 0.10 | 0.53 | 0.45 |
| 4 | III/A | 32.5 | 0.06 | 0.09 | 0.12 |
| 5 | IV/A | 32.5 | 0.08 | 0.30 | 0.28 |
| A | IV/B | 32.5 | 0.16 | 0.50 | 0.49 |
| B | IV/B | 32.5 | 0.08 | 0.73 | 0.56 |
| C | IV/B | 32.5 | 0.22 | 0.54 | 0.58 |
| D | IV/A | 42.5 | 0.68 | 0.81 | 1.21 |

TABLE 2 - <u>Chemical analysis of cement binders</u>

| | | SPECIMENS OF INVENTION | | | COMPARISON SPECIMENS | | | |
|---|---|---|---|---|---|---|---|---|
| SPECIMENS → | | 1 | 4 | 5 | A | B | C | D |
| ELEMENT ↓ | Unit ↓ | II/B-S 42.5 | III/A 32.5 | IV/A 32.5 | IV/B 32.5 | IV/B 32.5 | IV/B 32.5 | |
| m.l. | % | 3.06 | 1.93 | 4.47 | 5.41 | 6.36 | 4.68 | 2.09 |
| $SiO_2$ | % | 22.78 | 26.07 | 31.53 | 26.89 | 25.34 | 31.83 | 27.21 |
| $Al_2O_3$ | % | 5.81 | 8.16 | 8.76 | 8.80 | 7.14 | 7.57 | 7.09 |
| $Fe_2O_3$ | % | 1.62 | 1.94 | 2.81 | 4.57 | 4.52 | 2.70 | 5.84 |
| CaO | % | 58.90 | 52.71 | 44.79 | 45.81 | 47.98 | 44.85 | 49.93 |
| MgO | % | 2.96 | 4.44 | 1.21 | 2.49 | 2.06 | 2.04 | 2.81 |
| $SO_3$ | % | 3.09 | 2.77 | 1.97 | 2.38 | 2.75 | 2.47 | 2.39 |
| $Na_2O$ | % | 0.20 | 0.27 | 1.07 | 0.93 | 0.26 | 1.06 | 0.69 |
| $K_2O$ | % | 0.57 | 0.52 | 2.36 | 1.12 | 2.54 | 1.88 | 0.81 |
| SrO | % | 0.15 | 0.04 | 0.04 | 0.19 | 0.17 | 0.12 | 0.13 |
| $Mn_2O_3$ | % | 0.14 | 0.22 | <0.04 | 0.08 | 0.08 | 0.06 | 0.09 |
| $P_2O_5$ | % | 0.12 | 0.06 | 0.18 | 0.35 | 0.32 | 0.18 | 0.30 |
| $TiO_2$ | % | 0.57 | 0.38 | 0.34 | 0.58 | 0.37 | 0.26 | 0.51 |

m.l. = melting loss

The data given in Table 2 are expressed as % by weight with respect to the weight of the cement binder in the dry state.

Certain heavy metals show concentrations in the various specimens that fall within rather narrow ranges, whereas others, such as Cr(VI), Cu, Pb and Zn show somewhat wide variations.

## TABLE 3 - Incinerator ash - Chemical analysis

| ELEMENT | CONCENTRATION | | |
|---|---|---|---|
| m.l. | 2.10 | % | |
| $SiO_2$ | 21.19 | % | |
| $Al_2O_3$ | 11.89 | % | |
| $Fe_2O_3$ | 1.70 | % | |
| CaO | 23.89 | % | |
| MgO | 2.68 | % | |
| $SO_2$ | 7.40 | % | |
| $Na_2O$ | 6.35 | % | |
| $K_2O$ | 8.00 | % | |
| SrO | 0.03 | % | |
| $Mn_2O_3$ | 0.09 | % | |
| $P_2O_5$ | 1.61 | % | |
| $TiO_2$ | 1.48 | % | |
| Free CaO | 2.13 | % | |
| $S^-$ | 0.019 | % | LIMIT VALUE ACCORDING TO ITALIAN LAW |
| Cl | 10.20 | % | |
| Zn | 1.14 | % | |
| Te | <5 | ppm | 100 |
| Be | 10 | ppm | 500 |
| As | 52.80 | ppm | 100 |
| Cd | 350.00 | ppm | 100 |
| Total Cr | 350.00 | ppm | |
| $Cr^{6+}$ | 2.20 | ppm | 100 |
| Cu | 1570.00 | ppm | 5000 |
| Hg | 1.90 | ppm | 100 |
| Mn | 700 | ppm | |
| Pb | 7160.00 | ppm | 5000 |
| Sb | 511 | ppm | 50000 |
| Se | <5 | ppm | 100 |
| Tl | <5 | ppm | 100 |

In Table 3, the weight percentages and ppm are referred to the total amount of ash in the dry state. The metal concentrations that exceed the limit values allowed by current Italian legislation, i.e., Cd and Pb, are shaded. Also the high chloride content should be noted.

The mineralogical composition of the ash was determined by means of x-ray diffractometric analysis and optical microscope analysis. The diffraction spectrum indicated the presence of chlorides of alkaline metals, calcium sulphate, and quartz

A specimen of ash, after being sieved, separating the fraction having a grain size of between 63 and 90 $\mu$m, was immersed in bromonaphthalene and observed under the optical microscope in transmitted light at a magnification of 120 times.

The following phases were distinguished:

- glass particles          4 % by weight;
- crystalline particle         4 % by weight;
- cryptocrystalline particles        32 % by weight;
- opaque particles        60 % by weight.

The glass content was lower than 5 % by weight (the % by weight being with respect to the total weight of the ash in the dry state).

Preparation of specimens of cementitious compositions

The various specimens of the compositions were mixed with water in the conventional way, at room temperature, using cement binder:sand:ash weight ratios of approximately 40:20:20, and a water/cement binder (W/CB) weight ratio of approximately 0.50.

Tabulated in detail in Table 4 are the compositions of the specimens of cementitious mixtures made, where in the compositions obtained according to the present invention (those marked with an asterisk) the cement binder has a soluble alkali content of less than or equal to 0.45 % by weight.

TABLE 4 -

| Composition of mixtures | | | | | | | | |
|---|---|---|---|---|---|---|---|---|
| MIXTURE | CEMENT TYPE | | COMPOSITION (% BY WEIGHT) | | | | | |
| | | CLASS | CEMENT | ASH | AGGREGATE | WATER | W/CB[1] | |
| *1 | II/B-S | 42.5 | 39.74 | 19.87 | 19.87 | 20.52 | 0.52 | |
| *2 | II/B-S | 42.5 | 39.65 | 19.82 | 19.82 | 20.71 | 0.52 | |
| *3 | II/A-D | 32.5 | 39.74 | 19.87 | 19.87 | 20.52 | 0.52 | |
| *4 | III/A | 32.5 | 39.91 | 19.96 | 19.96 | 20.17 | 0.51 | |
| *5 | IV/A | 32.5 | 39.74 | 19.87 | 19.87 | 20.52 | 0.52 | |
| A | IV/B | | 40.27 | 20.13 | 20.13 | 19.47 | 0.48 | |
| B | IV/B | 32.5 | 40.00 | 20.00 | 20.00 | 20.00 | 0.50 | |
| C | IV/B | 32.5 | 40.09 | 20.04 | 20.04 | 19.53 | 0.49 | |

[1] W/CB = water/cement binder weight ratio

\* specimens of the invention

The cement binders of Table 4 belong to the categories of cements of type II, portland with slag or with microsilica, of type III with slag, and of type IV portland-pozzolana.

The specimens of cementitious compositions prepared as described above underwent the determinations referred to below.

RELEASE TESTS

Standard test with acetic acid (as per Resolution of the Italian Interministerial Committee of July 14, 1986, for application of Art. 4 of the DPR 915/1982)

The specimens of cementitious compositions to be analysed were granulated to obtain grain sizes of less than 9 mm and underwent the release tests with acetic acid as follows: the granulated specimen to be analysed was kept in contact, for 24 hours, with distilled water having a volume 16 times the weight of the granulated material to be analysed, at room temperature (approximately between +20°C and +25°C) and in any case at a temperature of between approximately +15°C and +30°C, maintaining the pH of the solution at values not higher than 5.0 (typically, pH 5.0 $\pm$0.2) by means of addition of diluted acetic acid 0.5M. The pH value may be kept under control either using standard methods or using an apparatus for automatic control of pH, without, however, adding more than 4 ml of diluted acetic acid per gram of solid specimen to be analysed.

In the course of the test, a sufficient degree of stirring is kept up to favour the contact between the liquid phase (extraction phase) and the solid phase undergoing analysis.

The analyses are carried out on the liquid extraction phase, which is separated by filtration or centrifugation from the solid phase at the end of the 24 hours, and mixed with any liquid phase that may have separated during pre-treatment (for example, during crushing of the specimen).

The analytical determinations are made according to the procedures described in the manuals IRSA 1972 "Metodi analitici per le acque, quali Sst. Ric. Acqua, 11" [Analytical methods for waters] and subsequent updatings.

Table 5 below gives the results of the release assay carried out on mortar specimens of different types at different curing times and indicates the parameters for which the tolerance limits set by current legislation for the two types of dumps, i.e., type B1 and type B2, are exceeded.

TABLE 5 -

| Release tests in acetic acid | | | | | |
|---|---|---|---|---|---|
| MIXTURE No | 3 days | | 28 days | | |
| | B1 | | B2 | B1 | B2 |
| 1 | pH | $Cr^{VI+}$ | | | |
| 2 | pH | $Cr^{VI+}$ | | | |
| 3 | pH | $Cr^{VI+}$ | | | |
| 4 | pH | $Cr^{VI+}$ | | | |
| 5 | pH | $Cr^{VI+}$ | | | |
| A | pH | $Cr^{VI+}$ | | $Cr^{VI+}$ | |
| B | pH | $Cr^{VI+}$ | | $Cr^{VI+}$ | |
| C | pH | $Cr^{VI+}$ | | $Cr^{VI+}$ | |

Results of Table 5

All the specimens tested meet the requirements for disposal in B2-type dumps already after 3 days of curing.

As regards the type of dump that imposes fewer constraints (i.e., the B1- type dump), the curing time takes on critical importance, both as far as the pH value is concerned and as far as the value of hexavalent chromium is concerned. In particular:

-    after 3 days of curing, the pH is outside the limits set for 81-type dumps by the Resolution of the Italian Interministerial Committee referred to in Art. 5 of the DPR No. 915 of September 10, 1985;

-    as regards hexavalent chromium, after 3 days of curing the limits set by current Italian laws are not met by any of the specimens assayed for 81-type dumps, whereas they are met by all the specimens assayed for 82-type dumps;

-    after 28 days of curing, the release limits for hexavalent chromium are met by all the specimens for 82-type dumps; for 81-type dumps, the limits are met by specimens 1, 2, 3, 4 and 5, i.e., the specimens according to the present invention, whereas they are not met by the comparison specimens A, B and C.

As regards heavy metals other than hexavalent chromium, at the various curing times none of the specimens analysed releases heavy metals in quantities higher than the limits set by current regulations for B1-type and B2-type dumps.

Consequently, on the basis of the release assay using acetic acid, the comparison specimens A, B and C do not meet the legal requirements for B1-type dumps after 28 days of curing.

Washing test - Decarbonated water

The specimens examined consisted of 2x4x16 cm prisms of mortar. The washing test was carried out in compliance with the Italian Standard UNI 10397 on massive specimens of mortar.

This test is used to assess the resistance of cements to washing with demineralized water, i.e., in very aggressive conditions for a cement binder; it moreover employs as an aggregate a standard sand with a grain size of 0-1 mm, which bestows a high level of porosity on the hardened mortar.

The results obtained from the extension of this method to the determination of the resistance to washing out of alkalis and of the heavy metals, as well as lime, can be considered as results of a limit test, which envisages such drastic circumstances that they are unlikely to be encountered in actual practice *in situ*.

<u>Procedure</u>

The test specimens of mortar were prepared as described previously, and had the composition shown in Table 4.

For the washing test, the cement mixture is prepared with decarbonated distilled water, also using sand consisting of one fraction of between 0 and 0.5 mm and one fraction of between 0.5 mm and 1.0 mm.

After mixing the components of the cement mixture, the mortar obtained is cast in 4x2x16 mm moulds, which are protected from the action of carbon dioxide present in the air by being coated with a plastic film. The test specimens are kept at a temperature of +20°C and with a relative humidity (RH) ≥95% for 24 hours. After being ejected, the specimens are weighed and hermetically sealed in plastic bags, which are put in an oven at 40°C ±0.5°C for a period of 13 days ±2 hours.

Once curing is completed, the test specimens are arranged in the washing apparatus set forth by the UNI 10397 Standard, where they are kept in contact with decarbonated water.

In the washing container, 1500 ml of decarbonated distilled water are added at a temperature of 20°C.

After 24 hours all the contact water is made to flow off into a perfectly clean and dry container, and a further 1500 ml of decarbonated distilled water are added in the test apparatus.

The subsequent operations for sampling and renewal of the washing water are carried out at 2, 3, 4, 7, 11, 15, 21 and 28 days. In addition to this schedule, a further sampling and renewal operation was carried out at 102 days, in order to assess release on a longer-term basis.

At each sampling and renewal time, the contact water is collected in a container and homogenized. The lime concentration in the solution is determined by means of titration using EDTA.

On one part of the solution, acidified with $HNO_3$, the alkali (Na, K) and heavy metal concentrations were determined via atomic absorption spectrophotometry.

The elements for which release is determined is calcium, which comes from the cement matrix, and the metal elements, which prevalently come from the waste.

The cumulative quantities of toxic and harmful elements are very low, and for certain elements they are below the sensitivity limits of absorption spectrophotometry using a graphite oven.

The following tables present the results obtained for mortar specimens corresponding to specimens 1, 4 and 5 according to the present invention.

The quantities of elements released are expressed as ppm (corresponding to mg/kg) of washed element with respect to the weight of the mortar specimen, except for release of CaO, which is expressed in g/kg of cementitious composition.

The measurement of the release of lime provides an indication of the overall durability of the material.

TABLE 6

SPECIMEN 1

| | | LEACHING TIME (DAYS) | | | | |
|---|---|---|---|---|---|---|
| Element | Unit | 1 | 3 | 7 | 28 | 102 |
| CaO | g/kg of cement | 2.148 | 4.669 | 6.738 | 10.764 | 12.088 |
| pH | | 12.9 | 12.7 | 12.5 | 13.0 | 12.9 |
| $Cr^{6+}$ | mg/kg | <0.03 | <0.03 | <0.03 | <0.03 | <0.03 |
| Zn | mg/kg | 0.030 | 0.070 | 0.011 | 0.017 | 0.02 |
| Pb | mg/kg | 0.133 | 0.222 | 0.288 | 0.393 | 0.495 |
| Cu | mg/kg | 0.009 | 0.016 | 0.023 | 0.036 | 0.045 |
| Al | mg/kg | <1 | 3.30 | 8.30 | 21.20 | 27.9 |
| Ni | mg/kg | <0.002 | 0.022 | 0.026 | 0.036 | 0.053 |
| Cd | mg/kg | 0.0008 | 0.0014 | 0.0019 | 0.0025 | 0.0270 |
| Hg | mg/kg | <0.001 | <0.001 | <0.001 | <0.001 | <0.001 |
| Na | mg/kg | 1090.0 | 1670.0 | 2149.0 | 3099.0 | 3779 |
| K | mg/kg | 1580.0 | 2330.0 | 3076.0 | 4434.0 | 5274 |
| Be | mg/kg | <0.0002 | <0.0002 | <0.0002 | <0.0002 | <0.0002 |
| Te | mg/kg | 0.007 | 0.017 | 0.017 | 0.017 | 0.017 |
| Se | mg/kg | <0.005 | <0.005 | <0.005 | <0.005 | <0.005 |
| As | mg/kg | 0.011 | 0.011 | 0.011 | 0.011 | 0.017 |
| Tl | mg/kg | <0.005 | 0.009 | 0.009 | 0.009 | 0.009 |
| Sb | mg/kg | <0.005 | 0.021 | 0.050 | 0.068 | 0.081 |
| Ba | mg/kg | <1 | <1 | <1 | <1 | <1 |
| Fe | mg/kg | <0.1 | <0.1 | <0.1 | <0.1 | <0.1 |
| Mn | mg/kg | <0.1 | <0.1 | <0.1 | <0.1 | <0.1 |

## TABLE 7

### SPECIMEN 4

| Element | Unit | LEACHING TIME (DAYS) | | | | |
|---|---|---|---|---|---|---|
| | | 1 | 3 | 7 | 28 | 102 |
| CaO | g/kg of cement | 1.436 | 3.229 | 4.754 | 7.877 | 8.840 |
| pH | | 12.8 | 12.5 | 12.7 | 12.9 | 12.7 |
| $Cr^{6+}$ | mg/kg | <0.03 | <0.03 | <0.03 | <0.03 | <0.03 |
| Zn | mg/kg | 0.26 | 0.38 | 0.44 | 0.53 | 0.56 |
| Pb | mg/kg | 0.099 | 0.157 | 0.202 | 0.282 | 0.344 |
| Cu | mg/kg | 0.122 | 0.158 | 0.175 | 0.221 | 0.233 |
| Al | mg/kg | <1 | 5.6 | 12.5 | 27.6 | 36.9 |
| Ni | mg/kg | 0.005 | 0.036 | 0.036 | 0.049 | 0.055 |
| Cd | mg/kg | 0.06 | 0.073 | 0.0779 | 0.0823 | 0.0827 |
| Hg | mg/kg | <0.001 | <0.001 | <0.001 | <0.001 | <0.001 |
| Na | mg/kg | 930 | 1420 | 1810 | 2415 | 3125 |
| K | mg/kg | 1180 | 1760 | 2323 | 3415 | 4275 |
| Be | mg/kg | <0.0002 | <0.0002 | <0.0002 | <0.0002 | <0.0002 |
| Te | mg/kg | 0.005 | 0.005 | 0.005 | 0.01 | 0.01 |
| Se | mg/kg | <0.005 | <0.005 | <0.005 | <0.005 | 0.016 |
| As | mg/kg | <0.005 | <0.005 | <0.005 | 0.01 | 0.005 |
| Tl | mg/kg | <0.005 | <0.005 | <0.005 | <0.005 | <0.005 |
| Sb | mg/kg | <0.005 | 0.02 | 0.053 | 0.139 | 0.152 |
| Ba | mg/kg | <1 | <1 | <1 | <1 | <1 |
| Fe | mg/kg | <0.1 | <0.1 | <0.1 | <0.1 | <0.1 |
| Mn | mg/kg | <0.1 | <0.1 | <0.1 | <0.1 | <0.1 |

TABLE 8

SPECIMEN 5

|  |  | LEACHING TIME (DAYS) | | | | |
|---|---|---|---|---|---|---|
| Element | Unit | 1 | 3 | 7 | 28 | 102 |
| CaO | g/kg of cement | 0.951 | 2.703 | 3.931 | 6.155 | 6.769 |
| pH |  | 12.8 | 12.1 | 12.5 | 13.1 | 12.8 |
| $Cr^{6+}$ | mg/kg | 0.06 | 0.06 | 0.06 | 0.06 | 0.04 |
| Zn | mg/kg | 0.06 | 0.10 | 0.14 | 0.20 | 0.203 |
| Pb | mg/kg | 0.059 | 0.100 | 0.136 | 0.211 | 0.272 |
| Cu | mg/kg | 0.019 | 0.031 | 0.042 | 0.066 | 0.084 |
| Al | mg/kg | 2.3 | 10.9 | 20.4 | 39.9 | 51.3 |
| Ni | mg/kg | 0.002 | 0.013 | 0.015 | 0.017 | 0.029 |
| Cd | mg/kg | 0.055 | 0.0615 | 0.0649 | 0.0685 | 0.069 |
| Hg | mg/kg | <0.001 | <0.001 | <0.001 | <0.001 | <0.001 |
| Na | mg/kg | 710 | 1200 | 1601 | 2548 | 3428 |
| K | mg/kg | 1070 | 1680 | 2330 | 3765 | 5015 |
| Be | mg/kg | <0.0002 | <0.0002 | <0.0002 | <0.0002 | <0.0002 |
| Te | mg/kg | 0.005 | 0.005 | 0.005 | 0.005 | 0.005 |
| Se | mg/kg | <0.005 | <0.005 | <0.005 | <0.005 | <0.012 |
| As | mg/kg | <0.005 | <0.005 | <0.005 | 0.005 | 0.005 |
| Tl | mg/kg | 0.005 | 0.005 | 0.005 | 0.005 | 0.005 |
| Sb | mg/kg | <0.005 | 0.008 | 0.037 | 0.081 | 0.097 |
| Ba | mg/kg | <1 | <1 | <1 | <1 | <1 |
| Fe | mg/kg | <0.1 | <0.1 | <0.1 | <0.1 | <0.1 |
| Mn | mg/kg | <0.1 | <0.1 | <0.1 | <0.1 | <0.1 |

Results of Tables 6, 7 and 8

From Tables 6, 7 and 8 it may be concluded that the specimens assayed release the various elements assayed in very low quantities, i.e., within the levels acceptable for storage in B1-type dumps. The element which appears to be most mobile is lead.

Release of calcium may be assumed as an index of the degradation of the specimen as a result of washing.

It may be noted that specimen 5, containing portland-pozzolana cement, presents a higher level of resistance to washing than does the mortar specimen 1, containing slag portland cement, or specimen 4, containing CEM III/A-type slag cement.

Hexavalent chromium, which in the release assay with acetic acid showed values higher than the limits set for B1-type dumps after 3 days, in the washing tests on 2x4x16 mm massive specimens was not released in any appreciable amounts.

Comparative release tests

Below are given the comparative release data obtained by carrying out the release assay in acetic acid and the washing (leaching) test, in compliance with the UNI 10397 Standard, on the mortar specimen 5 according to the present invention and on the comparison specimen D, which was obtained by mixing a cement binder with a type of ash other than the one used for specimen 5.

TABLE 9 -

| Release in acetic acid | | | |
|---|---|---|---|
| COMPARISON BETWEEN SPECIMEN 5 AND SPECIMEN D | | | |
| | Curing time for mortar (days) | | |
| Element | Initial quantity in mortar specimen | Quantity released by specimen after 28 days of curing | |
| | (mg/kg) | (mg/kg) | % |
| SPECIMEN 5 | | | |
| $Cr^{6+}$ | 0.92 | 0.06 | 0.65% |
| Pb | 1430 | 0.01 | 0.0% |
| Se | 2.98 | 0.005 | 0.17% |
| SPECIMEN D | | | |
| $Cr^{6+}$ | 8.44 | 0.80 | 9.5% |
| Pb | 1440 | 0.02 | 0.001% |
| Se | 2 | 0.031 | 1.55% |

TABLE 10 -

| Washing test in conformance with UNI 10397 Standard | | | |
|---|---|---|---|
| COMPARISON BETWEEN SPECIMEN 5 AND SPECIMEN D | | | |
| | Leaching time (days) | | |
| Element | Initial quantity in mortar specimen | Quantity released by specimen after 102 days of curing | |
| | (mg/kg) | (mg/kg) | % |
| SPECIMEN 5 | | | |
| $Cr^{6+}$ | 0.92 | 0.04 | 4.3% |
| Pb | 1430 | 0.27 | 0.02% |
| Se | 2.98 | 0.012 | 0.40% |
| SPECIMEN D | | | |
| $Cr^{6+}$ | 8.44 | 2.07 | 24.5% |
| Pb | 1440 | 0.41 | 0.03% |
| Se | 2 | 0.095 | 4.75% |

Results of Tables 9 and 10

The percentage data regard the weight percentage of released element with respect to the quantity initially contained in the mortar, deduced via chemical analysis of the components.

The results of Tables 9 and 10 show that, even though the capacity for retention of heavy metals is satisfactory for both the specimens assayed, specimen 5 according to the present invention shows a markedly lower tendency to release hexavalent Cr and Se than does specimen D, both in the release assay in acetic acid and in the UNI 10397 washing test.

The release profiles of the other elements (data not given herein) are substantially similar for the two specimens compared, and acceptable from the standpoint of storage in dumps in compliance with current regulations.

From Tables 9 and 10 it may moreover be seen how the present method is particularly suitable for inertization or immobilization of hexavalent chromium.

From Tables 9 and 10 it may moreover be seen how the present method is particularly suitable for inertization or immobilization of hexavalent chromium.

Expansion tests

Expansion of the cementitious compositions was determined as follows:

The thickness of three mortar prisms formed in 4x4x16 cm moulds and 3 mortar prisms formed in 4x2x16 cm moulds was measured upon ejection (24 hours at room temperature and with exposure to air after preparation of the prisms), using a micrometer calliper.

For each prism, 5 values were recorded for a total of 30 measurements.

Expansion, expressed as a percentage, is obtained from the mean value of the measurements, according to the following formula:

$$\frac{X-40}{40}\,100$$

where X is the mean value of the thickness after ejection.

TABLE 11 -

| Expansion of mortars | |
| --- | --- |
| SPECIMEN ASSAYED | EXPANSION (%) |
| 1 | 5.57 |
| 2 | 4.05 |
| 3 | 3.17 |
| 4 | 3.77 |
| 5 | 0.32 |
| A | 13.0 |
| B | 12.5 |
| C | 13.2 |
| D | 11.6 |

From the data tabulated in Table 11 it may be seen that the mortar specimens according to the present invention have expansion characteristics markedly better than specimens A-D, i.e., specimens prepared with cement binders having soluble equivalent $Na_2O$ values higher than 0.45 % by weight.

Compressive strength

The compressive strength of the plastic mortar specimens was determined according to the procedures described in the UNI- ENV 196 Standards, Part 1 (Table 12).

TABLE 12 -

| Compressive strength | | | |
| --- | --- | --- | --- |
| MIXTURE No. | COMPRESSIVE STRENGTH (N/mm$^2$) | | |
| | 3 days | 7 days | 28 days |
| 1 | 14.9 | 28.4 | 39.3 |

TABLE 12 -  (continued)

| Compressive strength | | | |
|---|---|---|---|
| MIXTURE No. | COMPRESSIVE STRENGTH (N/mm$^2$) | | |
| | 3 days | 7 days | 28 days |
| 2 | 6.5 | 23.5 | 39.4 |
| 3 | 0.3 | 14.6 | 36.4 |
| 4 | 3.0 | 19.3 | 40.1 |
| 5 | 5.6 | 18.4 | 38.6 |
| A | 5.6 | 12.1 | 23.7 |
| B | 11.2 | 20.2 | 36.1 |
| C | 6.7 | 16.0 | 30.1 |
| D | 14.6 | 20.5 | 35.4 |

Results of Table 12

For all the specimens analysed, compressive strength increases with time.

All the cementitious compositions selected according to the present invention (1, 2, 3, 4 and 5) present values of compressive strength sufficient for the handling and movement of the material, in particular values of between 0.3 and 15 N/mm$^2$, already 3 days after preparation of the test specimen.

Specimens A, B, C and D have values of compressive strength higher than 5 N/mm$^2$ 3 days after preparation of the specimen.

However, they are not to be considered satisfactory for the purposes of the present invention, in that they have characteristics of hexavalent-chromium release and of pH that are decidedly poorer than those of the specimens according to the present invention, as emerges from the data regarding release in acetic acid given previously; in addition, they show expansion values that are markedly poorer, as shown in Table 11.

**Claims**

1.  Use of a cement binder in the inertization or immobilization of waste, **characterized in that** the cement binder has a maximum soluble equivalent Na$_2$O content of 0.45 % by weight with respect to the binder in the dry state.

2.  Use according to Claim 1, in which the maximum soluble equivalent Na$_2$O content is 0.30 % by weight with respect to the binder in the dry state.

3.  Use according to Claim 1, in which maximum soluble equivalent Na$_2$O content is between 0.10 % by weight and 0.30 % by weight with respect to the binder in the dry state.

4.  Use according to Claim 1, in which the said waste is a toxic and a harmful waste.

5.  Use according to Claim 1, in which the said waste has a maximum organic matter content of 30 % by weight with respect to the waste in the dry state.

6.  Use according to Claim 1, in which the said waste is chosen among blast-furnace and foundry slag, ashes deriving from the combustion of coal or mineral oils, sludge from purification of fumes, sludge from treatment of metals and rocks, sludge from electro-galvanizing processes, residues of ceramic processes, sludge from tanning processes, paint residues, ashes from incineration plants, and sludge and slag deriving from chemical and electro-chemical processes.

7.  Use according to Claim 1, in which the said waste is chosen among residues of incineration of solid and urban waste, non-ferrous blast-furnace slag, mineral residues of the chemical industry, and asbestos residue.

8.  Use according to Claim 1, in which the waste is incinerator ash.

9.  Use according to Claim 1, in which the waste is a boiler slag.

10. Use according to Claim 1, in which the waste contains at least one element chosen among arsenic, cadmium, chromium, mercury, lead, copper, selenium, tellurium, and their salts or complexes, either organic or inorganic.

11. Use according to Claim 10, in which chromium is hexavalent chromium.

12. Method for the inertization or immobilization of waste by incorporating it in a cementitious composition, in which at least one type of waste is mixed by means of a mixing fluid with at least one cement binder, and is mixed optionally with one or more inert aggregates, and optionally with one or more cementitious additives, the said method being **characterized in that** the said cement binder has a maximum soluble equivalent $Na_2O$ content of 0.45 % by weight with respect to the weight of the cement binder in the dry state.

13. Method according to Claim 12, in which the cement binder is as defined in each one of the claims from 1 to 3.

14. Method according to Claim 12, in which the said waste is as defined in each one of the claims from 4 to 11.

15. Method according to Claim 12, in which the waste to be treated is mixed with the said binder at temperatures of between +5°C and +30°C.

16. Method according to Claim 12, in which the said waste is in quantities higher than 5 % by weight with respect to the total weight of the components of the cementitious composition in the dry state.

17. Method according to Claim 1, in which the said waste is in quantities of up to 20 % by weight with respect to the total weight of the components of the cementitious composition in the dry state.

18. Method according to Claim 1, in which the waste/cement binder weight ratios are between 1:2 and 3:1.

19. Method according to Claim 18, in which the waste/cement binder weight ratio is 2:1.

20. Method according to Claim 1, in which a water/cement binder (W/CB) weight ratio is used of between 0.6 and 0.4.

21. Method according to Claim 1, in which the water/cement binder (W/CB) weight ratio is 0.5.

22. Method according to Claim 1, in which the cementitious composition is a conglomerate.

23. Method according to Claim 1, in which the cementitious composition is a mortar.

24. Method according to Claim 1, in which the cement binder:aggregate:waste weight ratios used are between 3:1:1 and 1:1:2.

25. Cementitious composition comprising at least one type of waste, at least one cement binder, possibly one or more inert aggregates, and possibly one or more cementitious additives, **characterized in that** the cement binder is as defined in each one of the claims from 1 to 3.

26. Cementitious composition according to Claim 25, in which the said waste is as defined in each one of the claims from 4 to 11.

27. Cementitious composition according to Claim 25, in which the said waste is a boiler slag.

28. Cementitious composition according to Claim 25, having a compressive strength of at least 0.3 $N/mm^2$, measured after 3 days in compliance with the UNI-ENV 196 Standards, Part 1.

29. Cementitious composition according to Claim 28, having a compressive strength of between 3 $N/mm^2$ and 15 $N/mm^2$.

30. Cementitious composition according to Claim 1, which, when subjected to a release assay with acetic acid set forth by the Resolution of the Italian Interministerial Committee of July 14, 1986:

- after 3 days of curing releases hexavalent chromium in quantities lower than the limits contemplated by the above Resolution for B2-type dumps referred to in Art. 5 of the Italian DPR No. 915 of September 10, 1985;

- after 28 days of curing, it releases hexavalent chromium in quantities equal to or lower than the limits set forth for B1-type and B2-type dumps by the Resolution of the Italian Interministerial Committee referred to in Art. 5 of the Italian DPR No. 915 of September 10, 1985, and has a pH in conformance with the Resolution of the Italian Interministerial Committee referred to in Art. 5 of the Italian DPR No. 915 of September 10, 1985

31. Products and structures made of cement, comprising at least one cementitious composition as defined in the claims from 25 to 30.

**Patentansprüche**

1. Verwendung eines Zement-Bindemittels bei der Inertisierung oder der Immobilisierung von Abfall, **dadurch gekennzeichnet, daß** das Zement-Bindemittel einen Höchstgehalt an löslichem $Na_2O$-Äquivalent von 0,45 Gew.-%, bezogen auf das Bindemittel im trockenen Zustand, hat.

2. Verwendung nach Anspruch 1, wobei der Höchstgehalt an löslichem $Na_2O$-Äquivalent 0,30 Gew.-%, bezogen auf das Bindemittel im trockenen Zustand, ist.

3. Verwendung nach Anspruch 1, wobei der Höchstgehalt an löslichem $Na_2O$-Äquivalent zwischen 0,10 Gew.-% und 0,30 Gew.-%, bezogen auf das Bindemittel im trockenen Zustand, ist.

4. Verwendung nach Anspruch 1, wobei der Abfall ein toxischer und schädlicher Abfall ist.

5. Verwendung nach Anspruch 1, wobei der Abfall einen Höchstgehalt an organischem Material von 30 Gew.-%, bezogen auf den Abfall im trockenen Zustand, hat.

6. Verwendung nach Anspruch 1, wobei der Abfall aus Hochofen- und Gießereischlacke, Aschen, die aus der Verbrennung von Kohle oder Erdöl stammen, Schlamm aus der Reinigung von Rauch, Schlamm aus der Behandlung von Metallen und Gestein, Schlamm aus elektrogalvanischen Verfahren, Rückständen aus der Keramikverarbeitung, Schlamm aus Gerbverfahren, Anstrichmittelresten, Aschen aus Verbrennungsanlagen und Schlamm und Schlacke, die aus chemischen und elektrochemischen Prozessen stammen, ausgewählt wird.

7. Verwendung nach Anspruch 1, wobei der Abfall aus Rückständen einer Verbrennung von festem und städtischem Abfall, nicht-eisenhaltiger HochofenSchlacke, Mineralrückständen aus der chemischen Industrie und Asbestrückständen ausgewählt wird.

8. Verwendung nach Anspruch 1, wobei der Abfall Müllverbrennungsanlagenasche ist.

9. Verwendung nach Anspruch 1, wobei der Abfall eine Kesselschlacke ist.

10. Verwendung nach Anspruch 1, wobei der Abfall mindestens ein Element, ausgewählt aus Arsen, Cadmium, Chrom, Quecksilber, Blei, Kupfer, Selen, Tellur und ihren Salzen oder Komplexen, entweder organisch oder anorganisch, enthält.

11. Verwendung nach Anspruch 10, wobei Chrom 6-wertiges Chrom ist.

12. Verfahren zur Inertisierung oder Immobilisierung von Abfall, indem dieser in eine zementartige Zusammensetzung eingearbeitet wird, wobei mindestens ein Abfall-Typ mittels eines Mischfluids mit mindestens einem Zement-Bindemittel vermischt wird und gegebenenfalls mit einem oder mehreren inerten Aggregaten vermischt wird und gegebenenfalls mit einem oder mehreren zementartigen Additiven vermischt wird, wobei das Verfahren **dadurch gekennzeichnet ist, daß** das Zement-Bindemittel einen Höchstgehalt an löslichem $Na_2O$-Äquivalent von 0,45 Gew.-%, bezogen auf das Gewicht des Zement-Bindemittels im trockenen Zustand, hat.

13. Verfahren nach Anspruch 12, wobei das Zement-Bindemittel wie in einem der Ansprüche 1 bis 3 definiert ist.

14. Verfahren nach Anspruch 12, wobei der Abfall wie in einem der Ansprüche 4 bis 11 definiert ist.

15. Verfahren nach Anspruch 12, wobei der zu behandelnde Abfall bei Temperaturen zwischen +5°C und +30°C mit dem Bindemittel vermischt wird.

16. Verfahren nach Anspruch 12, wobei der Abfall in Mengen von höher als 5 Gew.-%, bezogen auf das Gesamtgewicht der Komponenten der zementartigen Zusammensetzung im trockenen Zustand, vorliegt.

17. Verfahren nach Anspruch 1, wobei der Abfall in Mengen von bis zu 20 Gew.-%, bezogen auf das Gesamtgewicht der Komponenten der zementartigen Zusammensetzung im trockenen Zustand, vorliegt.

18. Verfahren nach Anspruch 1, wobei das Abfall/Zement-Bindemittel-Gewichtsverhältnis zwischen 1:2 und 3:1 liegt.

19. Verfahren nach Anspruch 18, wobei das Abfall/Zement-Bindemittel-Gewichtsverhältnis 2:1 ist.

20. Verfahren nach Anspruch 1, wobei ein Wasser/Zement-Bindemittel (W/CB)-Gewichtsverhältnis zwischen 0,6 und 0,4 verwendet wird.

21. Verfahren nach Anspruch 1, wobei das Wasser/Zement-Bindemittel (W/CB)-Gewichtsverhältnis 0,5 ist.

22. Verfahren nach Anspruch 1, wobei die zementartige Zusammensetzung ein Konglomerat ist.

23. Verfahren nach Anspruch 1, wobei die zementartige Zusammensetzung ein Mörtel ist.

24. Verfahren nach Anspruch 1, wobei die Zement-Bindemittel:Aggregat:Abfall-Gewichtsverhältnisse, die verwendet werden, zwischen 3:1:1 und 1:1:2 liegen.

25. Zementartige Zusammensetzung, die mindestens einen Abfall-Typ, mindestens ein Zement-Bindemittel, möglicherweise ein inertes Aggregat oder mehrere inerte Aggregate und möglicherweise ein zementartiges Additiv oder mehrere zementartige Additive umfaßt, **dadurch gekennzeichnet, daß** das Zement-Bindemittel wie in einem der Ansprüche 1 bis 3 definiert ist.

26. Zementartige Zusammensetzung nach Anspruch 25, wobei der Abfall wie in einem der Ansprüche 4 bis 11 definiert ist.

27. Zementartige Zusammensetzung nach Anspruch 25, wobei der Abfall eine Kesselschlacke ist.

28. Zementartige Zusammensetzung nach Anspruch 25, die eine Druckfestigkeit von mindestens 0,3 N/mm$^2$, gemessen nach 3 Tagen gemäß den UNI-ENV 196 Standards, Teil 1, hat.

29. Zementartige Zusammensetzung nach Anspruch 28, die eine Druckfestigkeit von 3 N/mm$^2$ bis 15 N/mm$^2$ hat.

30. Zementartige Zusammensetzung nach Anspruch 1, die, wenn sie einem Freisetzungs-Assay mit Essigsäure, der durch die Resolution of the Italian Interministerial Committee vom 14. Juli 1986 beschrieben ist, unterworfen wird,

   - nach 3 Tagen Behandlung sechswertiges Chrom in Mengen freisetzt, die unter den Grenzen liegen, die von der obigen Resolution für Müllhalden des Typs B2 ins Auge gefaßt wurden und die in Artikel 5 des Italian DPR Nr. 915 vom 10. September 1985 beschrieben sind;

   - nach 28 Tagen Behandlung sechswertiges Chrom in Mengen freisetzt, die den Grenzen, die für Müllhalden des Typs B1 und des Typs B2 der Resolution of the Italian Interministerial Committee festgelegt wurden und die in Art. 5 der Italian DPR Nr. 915 vom 10. September 1985 beschrieben sind, entsprechen oder darunter liegen, und die einen pH hat, der der Resolution of the Italien Interministerial Committee entspricht und in Art. 5 der Italian DPR Nr. 915 vom 10. September 1985 beschrieben ist.

31. Produkte und Strukturen, die aus Zement hergestellt sind, der mindestens eine zementartige Zusammensetzung, wie sie in den Ansprüchen 25 bis 30 definiert ist, umfaßt.

**Revendications**

1. Utilisation d'un agglomérant dans l'inertage ou l'immobilisation de déchets, **caractérisé en ce que** l'agglomérant a une teneur en $NaO_2$ équivalente soluble maximale de 0,45 % en poids par rapport au liant à l'état sec.

2. Utilisation selon la revendication 1, dans laquelle la teneur en $NaO_2$ équivalente soluble maximale est de 0,30 % en poids par rapport au liant à l'état sec.

3. Utilisation selon la revendication 1, dans laquelle la teneur en $NaO_2$ équivalente soluble maximale est comprise entre 0,10 % en poids et 0,30 % en poids par rapport au liant à l'état sec.

4. Utilisation selon la revendication 1, dans laquelle ledit déchet est un déchet toxique et un déchet nocif.

5. Utilisation selon la revendication 1, dans laquelle ledit déchet a une teneur en matière organique maximale de 30 % en poids par rapport au déchet à l'état sec.

6. Utilisation selon la revendication 1, dans laquelle ledit déchet est choisi parmi le laitier de haut fourneau et de fonderie, les cendres produites par la combustion de kérosène ou d'huiles minérales, les boues issues de la purification des vapeurs, les boues issues du traitement de métaux et de roches, les boues issues des processus de zingage électrolytique, les résidus des traitements céramiques, les boues issues des processus de tannage, les résidus de peinture, les cendres produites par les usines d'incinération, et les boues et le laitier provenant des traitements chimiques et électrochimiques.

7. Utilisation selon la revendication 1, dans laquelle ledit déchet est choisi parmi les résidus d'incinération de déchet solide et urbain, le laitier de haut fourneau non ferreux, les résidus minéraux de l'industrie chimique, et les résidus d'amiante.

8. Utilisation selon la revendication 1, dans laquelle le déchet est la cendre d'incinérateur.

9. Utilisation selon la revendication 1, dans laquelle le déchet est un mâchefer.

10. Utilisation selon la revendication 2, dans laquelle le déchet contient au moins un élément choisi parmi arsenic, cadmium, chrome, mercure, plomb, cuivre, sélénium, tellure, et leurs sels ou complexes, soit organiques soit minéraux.

11. Utilisation selon la revendication 10, dans laquelle le chrome est le chrome hexavalent.

12. Procédé pour l'inertage ou l'immobilisation de déchet en l'incorporant dans une composition de liant, dans laquelle au moins un type de déchet est mélangé au moyen d'un liquide de mélange avec au moins un agglomérant, et est éventuellement mélangé avec un ou plusieurs agrégats inertes, et éventuellement avec un ou plusieurs additifs liants, ledit procédé étant **caractérisé en ce que** ledit agglomérant a une teneur en $Na_2O$ équivalente soluble maximale de 0,45 % en poids par rapport au poids de l'agglomérant à l'état sec.

13. Procédé selon la revendication 12, dans lequel l'agglomérant est tel que défini dans chacune des revendications 1 à 3.

14. Procédé selon la revendication 12, dans lequel ledit déchet est tel que défini dans chacune des revendications 4 à 11.

15. Procédé selon la revendication 12, dans lequel le déchet à traiter est mélangé avec ledit liant à des températures comprises entre +5° C et +30° C.

16. Procédé selon la revendication 12, dans lequel ledit déchet est en quantités supérieures à 5 % en poids par rapport au poids total des composants de la composition de liant à l'état sec.

17. Procédé selon la revendication 1, dans lequel ledit déchet est en quantités allant jusqu'à 20 % en poids par rapport au poids total des composants de la composition de liant à l'état sec.

**18.** Procédé selon la revendication 1, dans lequel les rapports en poids de déchet à agglomérant sont compris entre 1/2 et 3/1.

**19.** Procédé selon la revendication 18, dans lequel le rapport en poids de déchet à agglomérant est 2/1.

**20.** Procédé selon la revendication 1, dans lequel le rapport en poids d'eau à agglomérant (E/A) utilisé est compris entre 0,6 et 0,4.

**21.** Procédé selon la revendication 1, dans lequel le rapport en poids d'eau à agglomérant (E/A) est 0,5.

**22.** Procédé selon la revendication 1, dans lequel la composition de liant est un conglomérat.

**23.** Procédé selon la revendication 1, dans lequel la composition de liant est un mortier.

**24.** Procédé selon la revendication 1, dans lequel les rapports en poids d'agglomérant à agrégat à déchet utilisés sont compris entre 3/1/1 et 1/1/2.

**25.** Composition de liant comprenant au moins un type de déchet, au moins un agglomérant, éventuellement un ou plusieurs agrégats inertes, et éventuellement un ou plusieurs additifs liants, **caractérisée en ce que** l'agglomérant est tel que défini dans chacune des revendications 1 à 3.

**26.** Composition de liant selon la revendication 25, dans laquelle ledit déchet est tel que défini dans chacune des revendications 4 à 11.

**27.** Composition de liant selon la revendication 25, dans laquelle ledit déchet est un mâchefer.

**28.** Composition de liant selon la revendication 25, ayant une résistance à la compression d'au moins 0,3 N/mm$^2$, mesurée après 3 jours en conformité avec les Normes UNI-ENV 196, première partie.

**29.** Composition de liant selon la revendication 28, ayant une résistance à la compression comprise entre 3 N/mm$^2$ et 15 N/mm$^2$.

**30.** Composition de liant selon la revendication 1, qui, lorsqu'elle est soumise à un dosage de libération avec de l'acide acétique prescrit par la Résolution du Comité interministériel italien du 14 juillet 1986 :

- après 3 jours de cure, libère le chrome hexavalent en quantités inférieures aux limites prescrites par la Résolution ci-dessus pour les dépôts de type B2 désignée dans l'Article 5 de la DPR italienne n° 915 du 10 septembre 1985 ;
- après 28 jours de cure, libère le chrome hexavalent en quantités égales ou inférieures aux limites prescrites pour les dépôts de type B1 et de type B2 par la Résolution du Comité interministériel italien désignée dans l'Article 5 de la DPR italienne n° 915 du 10 septembre 1985, et a un pH en conformité avec la Résolution du Comité interministériel italien désignée dans l'Article 5 de la DPR italienne n° 915 du 10 septembre 1985.

**31.** Produits et structures composés de ciment, comprenant au moins une composition de liant telle que définie dans les revendications 25 à 30.

FIGURE 1

List of 28 groups of substances referred to in Attachment 1 of the DPR No. 915/1982

| 1. Arsenic and its compounds | 8. Antimony and its compounds | 15. Pesticides and phytopharmaceutical substances | 22. Selenium and its compounds |
|---|---|---|---|
| 2. Mercury and its compounds | 9. Phenols and their compounds | 16. Tar-based compounds deriving from refining processes and tar residues deriving from distillation operations | 23. Tellurium and its compounds |
| 3. Cadmium and its compounds | 10. Organic and inorganic cyanides | 17. Pharmaceutical compounds | 24. Polycyclic aromatic compounds (with carcinogenic effects) |
| 4. Thallium and its compounds | 11. Isocyanates | 18. Peroxides, chlorates, perchlorates, and azides | 25. Carbonyl metals |
| 5. Beryllium and its compounds | 12. Organohalogenated compounds, excluding the inert polymers and other substances included in the present list | 19. Ethers | 26. Soluble compounds of copper |
| 6. Compounds of hexavalent chromium | 13. Chlorinated solvents | 20. Non-identifiable laboratory chemical substances and/or new substances whose effects on the environment are unknown | 27. Acidic or basic substances used in surface treatment of metals |
| 7. Lead and its compounds | 14. Organic solvents | 21. Asbestos (dust and fibres) | 28. Polychlorobiphenyls, polychlorotriphenyls and their mixtures |